# EUROPEAN PATENT APPLICATION

(11) **EP 1 111 506 A1**
(43) Date of publication of application: **27.06.2001**
(21) Application number: 99403269.6
(22) Date of filing: 23.12.1999
(51) Int. Cl.: G06F 9/46, H04M 1/00

(54) **Method and apparatus for processing environment determination**

(71) Applicant: ALCATEL, 75008 Paris (FR)
(72) Inventor: Bos, Lieve Maria Marcella Rosemarijn, 9100 Sint-Niklaas (BE); Peters, Marco Johannes Hubertus, 4617 NS Bergen op Zoom (NL)
(74) Representative: Plas, Axel

(57) **Abstract**

The present invention relates to a processing environment determining means (PED) for inclusion in a telecommunication network. The processing environment determining means (PED) comprises first retrieving means (RET1) to retrieve one or more processing capability information (P_T1; P_T2; P_HN; P_VN; P_1N;P_SPE) associated to any one of a terminal (T1; T2), a network element (HNE; VNE; INE) of a sub-network (HN, VN, IN) and a service provider equipment (SPE) of a service provider (SP) of the telecommunication network. The processing determining means (PED) further comprises appointing means (APP) that are coupled to the first retrieving means (RET1). The appointing means is comprised to appoint, for a predefined service of a predefined client, according to predefined rules and conditions, and according to the processing capability information (P_T1; P_T2; P_HN; P-VN; P_IN; P_SPE), one or more out of the terminal (T1; T2), the network elements (HNE; VNE; INE) and the service provider (SPE). Hereby an appointed processing environment (P_APP) that has to be used to execute the predefined service is determined.

## Description

The present invention relates to a processing environment determining means for inclusion in a telecommunication network according to claim 1, to a telecommunication network comprising such a processing environment determining means according to the preamble of claim 9, to a method to be performed by such a processing environment determining means according to claim 10 and to a terminal capability server means and a network service capability server means that cooperates with such a processing environment determining means, according to the preamble of 7 and claim 8, respectively.

Such a processing environment is already known in the art. Indeed, a processing environment to execute a predefined service for a predefined user is known in a terminal or in service provider equipment of a service provider or in a sub-network of a telecommunication network and comprises e.g. a memory for storing the logic of a certain service, either pre-storing or either downloading at an appropriate moment, and processing power.

Indeed, in a telecommunication network such as a Universal Mobile Telecommunication System UMTS, different kind of services might be provided to different kind of users. For such an UMTS network the concept of Virtual Home environment is defined. A Virtual home environment is defined as a concept for personal service environment portability across network boundaries and between terminals. The concept of the Virtual Home environment is such that users are consistently presented with the same personalized features, User Interface customization and services in whatever network and whatever kind of terminal, wherever the user may be located. The Virtual Home Environment is seen as a key mechanism for convergence of fixed and mobile terminals, for public and private networks and operators and for telecommunication and data communication systems.

A terminal, either fixed terminal or mobile terminal, for use in such a virtual home environment comprises different kinds of terminal capability means. Such terminal capability means might comprise an execution environment to execute e.g. a UMTS application. A non-exhaustive list of examples of terminal capability means is provided here below:
- a Wireless Application Protocol WAP client that communicates via a WAP gateway with a WEB server in the Internet or other terminals. WAP specifies an application framework and network protocols for wireless devices such as mobile phones, pagers and personal digital assistants. The network protocols specify a way of transporting data between an Internet Protocol IP network and mobile terminals. The application framework enables the creation of Internet like services; and
- a Wireless Telephone Application WTA client that communicates with a WTA server in the network. WTA specifies an application framework that extends the WAP architecture with telephony services. It is a collection of telephony specific extension for call and feature control mechanisms that make advanced Mobile Network Services available to users. In contrast with classical client-server architecture e.g. WAP where the client continuously communicates with the server for the execution of the services actually running on the server, WTA adopts a terminal centric approach. WTA services run in the WTA client on the mobile terminal, which only communicates with the WTA server for maintenance and reconfiguration reasons; and
- a Java execution environment such as e.g. a Java card. A JavaCard is a recent evolution in the area of smart-cards with an enhanced architecture that has a Java Card Virtual Machine JCVM on top of its native Operating System OS and allows to develop applications written in Java programming language; and
- a User Service Identity Module USIM module that comprises e.g. an authentication algorithm and a ciphering key, a card identification, a user identification, network and service related data and UMTS SIM applications i.e. USIM applications; and
- a SIM Application Tool-kit provides mechanisms which allow applications that exist on the USIM to interact and to operate with any part of the mobile equipment of a mobile terminal.

It has to be remarked that according to the virtual home environment definitions a User Service Identity Module that identifies a user can be comprised in as well a fixed terminal as a mobile terminal. Such a USIM card comprises terminal capability means but might as well comprise terminal applications means with a terminal application.

On the other hand, a UMTS application can be performed in different execution environments of the telecommunication network. It has to be remarked here that a telecommunication network is defined here as an overall telecommunication network that comprises different sub-networks such as a home network, a visited network, one or more intermediate networks, etc. according to the definitions of the virtual home environment. According to these definitions it is explained that a visited network is a sub-network where a user is roaming i.e. the sub-network via which a user desires to get access to the overall telecommunication network; or an intermediate network is a third party sub-network which is neither the home network nor the visited network.

Such a sub-network can be implemented according to different kind of technologies e.g. mobile network, fixed network, Internet Protocol network, etc.

A sub-network comprises one or more execution environments to execute a service or an application for a user or for a third party service provider. Such an execution environment of a sub-network is called hereafter a network element of a sub-network.

Furthermore, the overall telecommunication network comprises service provider equipment of service providers. These service providers are e.g. independent third party service providers which make use of the underlying technology and available sub-network resources to provide different kind of services to a user or to a sub-network. Such service provider equipment comprises as well one or more execution environments to execute the delivered services.

A further remark is that such service provider equipment that is exploited by a service provider can be an independent party or can be as well be integrated in a sub-network of one of the sub-network operators.

So, the execution of an application can be performed in various execution environments e.g. on a terminal, in the home network, in a visited network, in an intermediate network or at a service provider equipment.

A problem outstanding with these different kinds of processing environments is that a party that desires to deliver a best possible service to its client not always comprises a suitable execution environment for this. The definition of best possible service is depending on the actors e.g. for a user, to whom the service is to be delivered, it could mean with the lowest latency, for a third party service provider it could mean as close as possible to its client to reduce the transport cost, for a network operator of a sub-network it could means with the minimum signaling load on the network, etc. Furthermore, for a predefined service of a predefined client the processing environment that is used to execute this predefined service is pre-determined by the generation of the code of the service itself.

It has to be explained that a client is defined as the party that receives a predefined service. This client is usual a user of a terminal in the event when the delivered service is a user application. However, it has to be understood that, according to the definitions of a virtual home environment, also an independent third party service providers can deliver a certain service to an operator of a sub-network in order to support this operator to exploit its network.

An object of the present invention is to provide a processing environment determining means for a predetermined service of a predetermined client that not pre-determines a processing environment by generation of the service code itself, but that automatically determines the best possible processing environment for this predefined service of this predefined client.

This object is achieved by the processing environment determining means according to claim 1, by the telecommunication network that comprises such a processing environment determining means according to claim 9, by the method that is used by such a processing environment determining means according to claim 10, by the terminal capability server means and the network service capability server means that inter-operates with such a processing environment determining means according to claim 7 and claim 8, respectively.

Indeed, the processing environment determining means comprises first retrieving means to retrieve one or more processing capability information associated to any one of a terminal, a network element of a sub-network and a service provider equipment of a service provider. Furthermore, the processing environment determining means comprises an appointing means that is coupled to the first retrieving means to appoint, for a predefined service of a predefined client, according to predefined rules and conditions, and according to the processing capability information, one or more out of the terminal, the network elements and the service provider equipment, and to determine thereby an appointed processing capability that has to be used to execute the predefined services.

The processing capability information is information that concerns values of characteristics of the available processing environments for the execution of a predefined service. These characteristics of the processing capabilities of a processing environment are e.g. the actual available free memory space, the available free processing power, but also the type of available execution environment e.g. JAVA execution environment or WAP execution environment on a terminal, or both.

It has to be remarked that the processing capability information is retrieved from a dedicated memory that eventual is comprised in the processing environment determining means itself. In this way, the information is requested to the different parties in advance and stored in this dedicated memory by a service provider that exploits this processing environment determining means. At run-time, the processing environment determining means appoints according to the predefined rules and conditions the best possible execution environment. However, the processing capability information might be as well retrieved from the terminal, the network elements or the service provider equipment themselves and on-line. Even more, retrieving of this information might be done according to a combined solution. Indeed, as an example, the information can be retrieved at first instance from the dedicated memory and, in the event when the information seems to be obsolete, updated information is retrieved from the terminal or the network elements or the service provider equipment itself. This updated information might be even used in order to update the dedicated memory. Such a dedicated memory can be comprised in the processing environment determining means itself or outside the processing environment determining means.

It has to be explained that the predefined rules and conditions comprise e.g. time-related aspects, service-related aspects, cost aspects, etc.

The following two rules and conditions are given as an example:
- for a particular service, the appointing means uses a first value for a particular delay used in the algorithm that represents the rules and conditions when the service is desired during the working hours, and the appointing means uses a second value for this delay when the service is desired outside the working hours.
- for a particular kind of service using a priori a predefined network element to execute this service but for all other kind of services appointing a processing capability environment according to a present predefined subset of rules and conditions.

It is described by claim 2 that the predefined rules and conditions are at least partly determined by any one of user requirements and user preferences of a user that uses a terminal, and operator requirements and operator preferences of an operator that exploits the network elements, and service provider requirements and service provider preferences of a service provider that operates the service provider equipment. In this way, the different parties that comprises the different processing environments are involved in the appointing process. It has to be explained that user requirements are e.g. required minimum delays for receiving a result of a service, required predefined Quality of Service and a user preference is e.g. a preferred Quality of Service. The sub-network requirements are e.g. maximum load balancing statistics or required processing capacity distribution in the different network elements of a sub-network and a sub-network preference is e.g. preferred processing capacity distribution in the different network elements of the sub-network.

It has to be explained that when a designer designs a predefined service, the designer can provide this service to another party in order to exploit the service. In this way, the other party can be the service provider but can as well be one of the sub-network operators, whereby the service provider equipment is integrated as a part of the sub-network.

A further characteristic feature is described in claim 3. The predefined requirements and preferences are e.g. communicated by a user to a the party that exploits the processing environment determining means and are entered as a parameter in an algorithm that represents the predefined rules and conditions. However, in claim 3, the processing environment determining means further comprises second retrieving means to retrieve, not only from a memory, but eventual also 'on line' updated user requirements, user preferences, operator requirements, operator preferences, service provider requirements and service provider preferences from any one of a terminal, a network element and a service provider equipment.

It has to be explained that the implementation of the processing environment determining means with e.g. a first retrieving means or a second retrieving means that retrieves the necessary information on-line from the different network elements, service providers and terminals, gives a problem in the event when different manufacturers are involved. Indeed, the signaling between e.g. a processing environment determining means comprised e.g. in a certain sub-network that is designed by a first manufacturer and a terminal that is designed by a second manufacturer needs to be lined up in the event when the processing environment determining means desires to retrieve the user requirements or user preferences on-line and, even more, in the event when the processing environment determining means desires to offer its service of automatically determining the best possible environment for a predefined service of this user as a predefined client.

This problem is solved by the characteristic feature of claim 4 whereby the first retrieving means retrieves the processing capability information from any one of a terminal capability server means via predefined terminal application open signals and a network service capability server means of a sub-network via predefined network application open service architecture signals.

It has to be explained that a terminal capability server means of a terminal is described in a *non-published pending patent application with application number 99403045.0 with first filing date 6*^{*th*}*, December 1999 and filed by Alcatel.* Herein, a terminal for use in a communication network is described. The terminal comprises a plurality of terminal capability means to realize a plurality of terminal capability features. Terminal application means are coupled to the terminal capability means to interact with one or more of the plurality of terminal capability means and to execute thereby a terminal application. The terminal further comprises at least one terminal capability server means coupled between the terminal application means and to at least one of the plurality of terminal capability means. The terminal capability server means is adapted to translate a first application signal received from at least one of the plurality of terminal capability means into a first predefined application open signal and to provide the first predefined application open signal to the terminal application means. The terminal capability server means is also adapted to translate a second predefined application open signal received from the terminal application means into a second application signal and to provide the second application signal to at least one of the plurality of terminal capability mean. Furthermore is the first predefined application open signal and is the second predefined application open signal defined independently of an underlying technology of the plurality of terminal capability means.

By defining a terminal capability server means especially towards the processing capabilities of the terminal and by defining the related predefined terminal application open signals, the processing environment determining means is enabled to design its service of automatically appointing a best possible environment according to a terminal independent technology i.e. writing its service once for each type of terminal of different kinds of technologies. Furthermore, by advertising the processing capabilities of a terminal according to the terminal application open signals of the above mentioned document, the first retrieving means of the processing environment determining means is enabled to retrieve this information from the terminal according to a transparent way to the user.

Such a terminal capability server means that co-operates with a processing environment determining means according to claim 4 is described in claim 7.

On the other hand, it has to be explained that a predefined network open service architecture interface is e.g. described by the third Generation Partnership Project, Technical Specification Group Services and System Aspects, Virtual Home environment / Open Service Architecture with reference 3G TS 23.127 version 1.0.0 and available for the public at by 650 Route des Lucioles-Sophia Antipolis, Valbonne - France and via the World Wide Web at http://www.3gpp.org and in October, 1999. This document describes an Open Service Architecture. It is mentioned that the Open Service Architecture OSA defines an architecture that enables operator and third party applications to make use of network functionality through an open standardized interface i.e. the OSA Interface. Open Service Architecture provides the glue between applications and service capabilities provided by the network. In this way applications become independent from the underlying network technology. The applications constitute the top level of the Open Service Architecture OSA. This level is connected to the Service Capability Servers via the Open Service Architecture interface. The Service Capability Servers map the Open Service Architecture interface onto the underlying telecom specific protocols and are therefore hiding the network complexity from the applications.

By defining a network service capability server means of a sub-network especially towards the processing capabilities of the sub-network and by defining the related predefined network application open service architecture signals, the processing environment determining means is enabled to design its service of automatically appointing a best possible environment according to a sub-network independent technology i.e. writing its service once for each kind of sub-network different kinds of manufacturers. Furthermore, by advertising the processing capabilities of a sub-network according to the network application open service architecture signals of the above mentioned document, the first retrieving means of the processing environment determining means is enabled to retrieve this information from the sub-network according to a transparent way to the sub-network.

Such a network service capability server means that co-operates with a processing environment determining means according to claim 4 is described in claim 8.

As it is described in the above mentioned document concerning terminal capability server means, a further advantage becomes clear in the event when the predefined terminal application open signals are defined in accordance with the predefined network application open service architecture signals. Indeed, in such an event the processing environment determining means can be designed once in order to be included in as well a third party service provider as in a sub-network.

Claim 5, describes that the processing environment determining means according to the present invention can be comprised in any one of a terminal, a sub-network being any one of a home network, a visited network and an intermediate network of said telecommunication network and a service provider equipment.

A final characteristic features becomes clear by explaining that the first retrieving means might retrieve processing capability information that is associated to any one of a User Service Identity Module USIM of a terminal and a terminal equipment of a terminal. Indeed, as it is described above a terminal can comprise next to its terminal equipment also an USIM that has its own processing capability. This is described in claim 6.

A further remark is that a predefined client, according to the invention, is not always limited to only one user. Indeed, according to an example of a Wireless Application Protocol game i.e. 'playing chess between two users', provided by a WAP service provider, one part of the required service logic can be downloaded to a terminal of the first user, while another part of the service logic can be downloaded to a terminal of the second user. In this way, the WAP service provider uses the processing environment determining means. The appointing means of the processing environment determining means comprises rules and conditions which e.g. first determines the terminal of the user with the strongest execution environment. Hereafter, that part of the service logic, which requires the strongest execution environment, is appointed to that terminal of that user and downloaded accordingly.

A final remark is that, according to the definitions of virtual home environment, one user might use two different terminals what can be checked for instance in its user profile at the home environment of the user. In this way, the processing determining means can retrieve as well the processing capability information of the first terminal as the processing capability information of the second terminal.

It should be noticed that the term 'comprising', used in the claims, should not be interpreted as being limitative to the means listed thereafter. Thus, the scope of the expression 'a device comprising A and B' should not be limited to devices consisting only of components A and B. It means that with respect to the present invention, the only relevant components of the device are A and B.

Similarly, it is to be noted that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

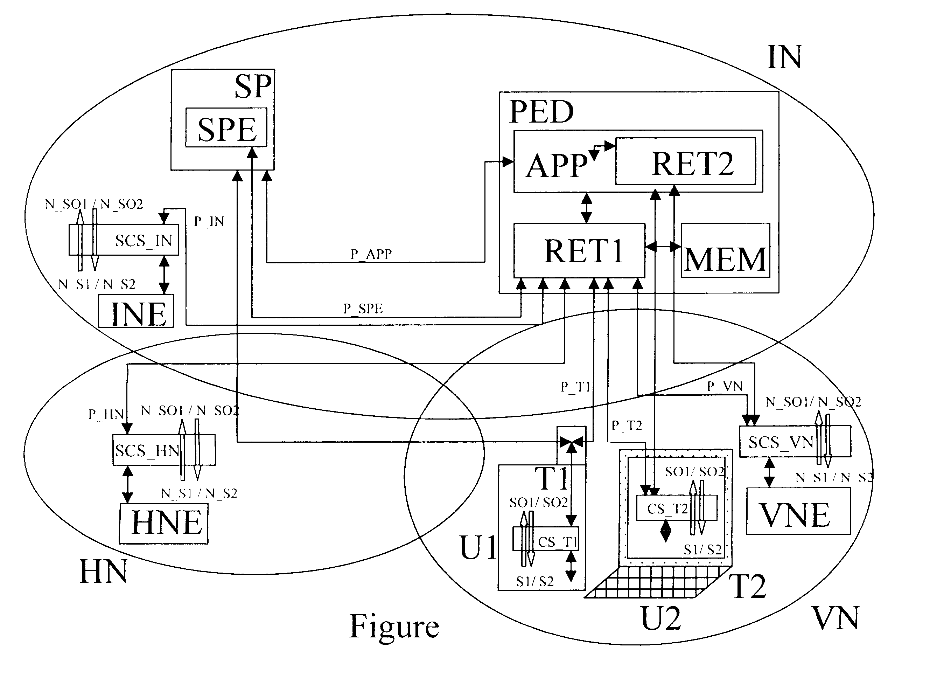

The above and other objects and features of the invention will become more apparent and the invention itself will be best understood by referring to the following description of an embodiment taken in conjunction with the accompanying figure that represents a telecommunication network in a virtual environment that comprises a processing environment determining means according to the present invention.

Referring to the figure the working of the processing environment determiner PED in accordance with the other network elements will be explained by means of a functional description of the functional blocks shown therein. Based on this description, implementation of the functional blocks will be obvious to a person skilled in the art and will therefore not be described in details. In additional, the principle working of the processing environment determiner PED will be described in further detail by means of a principle example.

Referring to the Figure, a telecommunication network in a virtual environment is described.

The telecommunication network comprises different sub-networks whereof three sub-networks are shown: a home network HN of the two users U1 and U2; a visited network VN where the two users are actual roaming and a intermediate network IN.

Each of the sub-networks comprises an execution environment to execute services, called a network element of a sub-network. In this way the home network HN comprises a home network element HNE, the visited network VN comprises a visited network element VNE and the intermediate network IN comprises an intermediate network element INE.

User U1 is using a terminal T1 and user U2 is using a terminal T2, both in the visited network VN. Therefore, both terminals T1 and T2 are shown in the figure within the visited network VN. According to a preferred example that will be described later in this description, terminal T1 and terminal T2 are both WAP terminals.

Presume the presence of both, a processing environment determiner PED, according to the present invention, and a service provider SP with its service provider equipment, in the intermediate network IN. Also, according to the later described example, the service provider SP with its service provider equipment is a WAP service provider.

A preferred embodiment of the invention is an implementation of the invention in a telecommunication network that comprises interfaces according to terminal application open signals and according to network open service architecture signals. Indeed, according to such an implementation the service that is delivered by the processing environment determiner PED can be written once in order to be applied towards different network and different terminals of different technologies. In this way a terminal capability server is included in both terminals i.e. CS_T1 and CS_T2 to translate technology dependent signals of the terminal into technology independent signals. Furthermore, the sub-networks are each comprising a network service capability server i.e. SCS_HN, SCS_IN and SCS_VN in order to translate the network technology dependent signals into network technology independent signals. Even more, it is preferred for this embodiment to define the terminal application open signals in accordance with the defined network application open service architecture signals.

The processing environment determiner means PED comprises a first retrieving means RET1, an appointing means APP, a dedicated memory MEM and a second retrieving means RET2.

The first retriever RET1 is coupled to inputs and outputs of the processing environment determiner PED. The memory MEM is coupled to the first retriever RET1. The appointing means APP is coupled to the first retriever RET1 and an input and output of the processing environment determiner PED. The second retriever RET2 is comprised within the appointing means APP and is coupled to inputs and outputs of the processing environment determiner PED.

The first retriever RET1 is comprised to retrieve processing capability information from the different terminals and network elements e.g. P_T1 from terminal T1 or P_HN from the home network element HNE. This action is initialized upon reception of a signal from a party that desires to provide a service to one or more other parties. Such a signal comprises typically e.g. the identification of the party that desires to use the processing environment determining means PED, the identification of the different parties that are going to use the service and information related to the service itself. The information related to the service itself comprises e.g. the requested processing capabilities or the requested available memory to download e.g. the associated logic.

It has to be remarked here that the requirements and the preferences of the designer of a service are implicitly comprised in the logic of a service itself. A non restrictive implementation is that the processing environment determiner PED eventually downloads the service logic by itself in order to determine these designer requirements and designer preferences.

It has to be understood that retrieving processing capability information involves transmitting a request signal and receiving an answer signal. It has to be remarked that this is in the figure only shown by one line. Furthermore due to definitions of the terminal application open signals (SO1; S02) and the network application open service architecture signals (N_SO1; N_SO2) the required signals to retrieve the requested information are lined up with each other. Due to the definition of the terminal application open signals (SO1; SO2), retriever RET1 retrieves the processing capability information from terminal T2 and terminal T2 according to a transparent way for the users U1 and U2. Due to the network application open service architecture signals (N_SO1; N_SO2) the processing capability information of the sub-networks is automatically retrieved according to an underlying technology independent way.

The first retriever RET1 also retrieves information from the dedicated memory. It has to be understood that different working methods are possible to implement the way of interacting between the dedicated memory MEM and the first retriever RET1. It is preferred for this embodiment that the first retriever RET1 first checks the memory MEM upon the presence of the desired information and that in the event when the desired information is available and is still recent enough, the first retrievers RET1 uses it. In the other events, the first retriever RET1 retrieves the information from the network elements and terminals itself.

The necessary processing capability information e.g. P_T1 and P_T2 is forwarded to the appointing means APP that appoints according predefined rules and conditions an appointed processing environment P_APP. These predefined rules and conditions can be implemented, as it is explained above, according to different ways. An example will be described here in a later paragraph. The second retriever RET2 is comprised to retrieve requirements and preferences of the different parties:
- user requirements and user preferences from user U1 and user U2; and
- operator requirements and operator preferences from the different operators of the sub-networks e.g. the home network HN; and
- service provider preferences and service provider requirements from the service provider SP.

The second retriever RET2 can be implemented according to different ways. Indeed, the second retriever can act e.g. pro-active and retrieve some basic requirements and preferences in advance. On the other hand, the second retriever RET2 can also react upon the installed predefined rules and conditions in the appointing means and thereby only retrieves information when the appointing means asks for it. An example will be described hereafter.

The example that will be described to explain the principle working and the advantages of the present invention concerns the above- mentioned example of two terminal users that desire to play chess. User U1 wants to play chess with user U2. Therefore user U1 contacts the WAP service provider SP and forwards its desire i.e. playing chess via its terminal T1 with user U2 via its terminal T2. The service provider SP wants to deliver the service to user U1 and its counterparts but is programmed to deliver the service in the best possible way to the different actors. Therefore the service provider SP contacts the processing environment determiner PED. The processing environment determiner PED receives in this way a request to appoint the best possible processing environment for this predefined service i.e. playing chess between user U1 and user U2, clients of a predefined service provider SP. Upon this request to the processing environment determiner PED its first retriever RET1 reacts by retrieving the processing capability information from the different actors i.e. user U1 and user U2. After controlling the memory MEM, it seems that the processing capability information of the terminal of user U1 i.e. terminal T1 is not known in the memory MEM and the first retriever RET1 requests this information to the first terminal T1. It has to be remarked that due to the implementation of open signals, this request and answer i.e. providing the processing capability information P_T1 of terminal T1 happens totally transparent to user U1. After controlling the memory MEM, it seems that the processing capability information or the terminal T2 is stored in the memory, but however, it seems to be obsolete. Therefore, also terminal T2 is requested according to a transparent way to user U2 to supply its processing capability information P_T2. The retrieved information P_T1 and P_T2 is provided by the first retriever to the appointing means APP. The appointing means APP starts an appointing process to appoint according to predefined rules and conditions, for this predefined service of this predefined client, an appointed processing environment P_APP. However, according to these predefined rules and conditions it turns out that the logic associated to the requested WAP game chess is best downloaded to the biggest available memory. The biggest available memory seems to be the memory of the terminal T2. Furthermore, also according to these predefined rules and conditions, the appointing of terminal T2 to the appointed processing environment P_APP is only permitted upon a check up of the actual preferences of the user of terminal T2 i.e. user U2. Retriever RET2 retrieves therefore via terminal T2 the preferences of user U2. In this way user U2 is contacted via its terminal T2, by the second retriever RET2, with the request to provide its preferences i.e. user preferences and user requirements. The reason behind this explicit request is that e.g. user U2 might plan to use, in the very near future, the available memory of its terminal T2 for other purposes as for the chess game with user U1. User U2 provides its preferences to the second retriever RET2 which supplies this information to the appointing means APP. The appointing means is hereby enabled to continue its appointing process. Presume that user U2 didn't want to share the memory of terminal T2 for the purpose of playing chess with user U1. The appointing means continues its process and requests again at the address of the first retrieving means RET1 the processing capability information of the involved sub-networks. The involved sub-networks are the home networks of both users i.e. the sub-network HN for both, the visited network of both users i.e. the sub-network VN and the sub-network wherein the service provider is located i.e. the intermediate network IN. The first retriever RET1 checks firstly the memory MEM upon the presence of the processing capability information P_HN, P_VN and P_IN of the dedicated network elements, respectively, HNE, VNE and INE of the different sub-networks HN, VN and IN, respectively. After receiving a negative answer from the network for the three information packets, the first retriever RET1 requests the information to the different network elements of the different sub-networks. Each network element provides, according to signals that are similar to the predefined network open service architecture signals N_SO1 and N_SO2, its processing capability information P_HN, P_VN and P_IN to the first retriever RET1. The first retriever RET1 provides this information to the appointing means APP which continues its appointing process.

It has to be remarked here, that although according to this present example the appointing means interrupts its process of appointing until the first retriever RET1 supplies again the additional information, the present invention is not limited to examples like this. Indeed, it is evident to a person skilled in the art that this present example and description of an embodiment might be adapted in order to implement other examples which are not providing an interruption of the appointing process. Such and example is e.g. requesting by the retriever RET1 all the required information that is necessary to run through the complete set of predetermined rules and condition. Such an implementation has however the disadvantage of the risk of using only part of the retrieved information while completing a condition during a first part of the complete set of rules and conditions.

According to the predefined rules and conditions, the requirement of user U1 which is 'response delay from other party must be smaller than a predetermined delay value', must be taken into account in order to appoint the suitable processing environment. Since the response delays of the home network HN and the intermediate network IN are to big to fulfill this requirement the appointing means APP appoints the visited sub-network VN as suitable processing environment. The second retriever RET2 executes a final check-up at the visited network element VNE in order to control that the capacity distribution of the visited network VN is met by making this appointment. Upon a positive response from the visited network, the visited network VN is finally appointed as the appointed processing environment P_APP in order to execute the predefined service i.e. the WAP game of chess between user U1 via its terminal T1 and user U2 via its terminal T2. The processing environment determiner PED forwards this result to the service provider SP. The service provider SP is finally enabled to deliver a best possible service for the different actors' i.e. the users as well the operators of the sub-networks. The service provider SP executes the necessary actions to provide in fact the chess game to both users by e.g. downloading the logic concerning the game to the visited network VN.

While the principles of the invention have been described above in connection with specific apparatus, it is to be clearly understood that this description is made only by way of example and not as a limitation on the scope of the invention, as defined in the appended claims.

## Claims

1. A processing environment determining means (PED) for inclusion in a telecommunication network, **characterized** in that said processing environment determining means (PED) comprises first retrieving means (RET1) to retrieve one or more processing capability information (P_T1; P_T2; P_HN; P_VN; P_IN; P_SPE) associated to any one of a terminal (T1; T2), a network element (HNE; VNE; INE) of a sub-network (HN; VN; IN) and a service provider equipment (SPE) of a service provider (SP) of said telecommunication network; and said processing determining means (PED) further comprises appointing means (APP) being coupled to said first retrieving means (RET1) to appoint, for a predefined service of a predefined client, according to predefined rules and conditions, and according to said processing capability information (P_T1; P_T2; P_HN; P_VN; P_IN; P_SPE), one or more out of said terminal (T1; T2), said network elements (HNE; VNE; INE) and said service provider equipment (SPE), and to determine thereby an appointed processing environment (P_APP) that has to be used to execute said predefined service.

2. The processing environment determining means (PED) according to claim 1, characterized in that said predefined rules and conditions are at least partly determined by any one of user requirements and user preferences of a user (U) that uses said terminal (T1; T2), operator requirements and operator preferences of an operator that exploits said network element (HNE; VNE; INE), service provider requirements and service provider preferences of a service provider (SP) that operates said service provider equipment (SPE).

3. The processing environment determining means (PED) according to any one of claim 1 and claim 2, characterized in that said processing environment determining means (PED) comprises second retrieving means (RET2) to retrieve any one of said user requirements, said user preferences, said operator requirements, said operator preferences, said service provider requirements, said service provider preferences from any one of said terminal (T1; T2), said network elements (HNE; VNE; INE) and said service provider equipment (SPE) in order to update said predefined rules and conditions accordingly.

4. The processing environment determining means (PED) according to any previous claim, characterized in that said first retrieving means (RET1) retrieves said one or more processing capability information (P_T1; P_T2; P_HN; P_VN; P_IN; P_SPE) from any one of a terminal capability server means (CS_T1; CS_T2) of said terminal (T1; T2) via predefined terminal application open signals and a network service capability server means (SCS_HN; SCS_VN; SCS_IN) of a sub-network (HN; VN; IN) via predefined network application open service architecture signals.

5. The processing environment determining means (PED) according to any previous claim, characterized in that said processing environment determining means (PED) is comprised in any one of a terminal (T1; T2) a sub-network being any one of a home network (HN), a visited network (VN) and a intermediate network (IN) of said telecommunication network and a service provider equipment (SPE).

6. The processing environment determining means (PED) according to any previous claim, characterized in that said first retrieving means (RET1) retrieves processing capability information (P_T1; P_T2) that is associated to any one of a User Service Identity Module (USIM) of said terminal (T1; T2) and a terminal equipment (TE) of said terminal (T1; T2).

7. A terminal capability server means (CS_T1; CS_T2) of a terminal (T1; T2) to be used in a telecommunication network, said terminal capability server means (CS_T1; CS_T2) is adapted to translate first application signals (S1) into first predefined terminal application open signals (SO1) and to translate second predefined terminal application open signals (S02) into second application signals (S2), **characterized** in that said first predefined terminal application open signals (SO1) and said second predefined terminal application open signals (S02) comprises processing capability information (P_T1; P_T2) in order to be forwarded to a processing environment determining means (PED) according to any one of claim 4.

8. A network service capability server means (SCS_HN; SCS_VN; SCS_IN) of a sub-network (HN; VN; IN) of a telecommunication network, said network service capability server means (SCS_HN; SCS_VN; SCS_IN) is adapted to translate first application signals (N_S1) into first predefined network application open service architecture signals (N_SO1) and to translate second predefined network application open service architecture signals (N_SO2) into second application signals (N_S2), **characterized** in that said first predefined network application open service architecture signals (N_SO1) and said second predefined network application open service architecture signals (N_SO2) comprises processing capability information (P_HN; P_VN; P_IN) in order to be forwarded to a processing environment determining means (PED) according to any one of claim 4.

9. A telecommunication network, **characterized** in that said telecommunication network comprises at least one processing environment determining means (PED) according to any previous claim.

10. A method to be used by a processing environment determining means of a telecommunication network, **characterized** in that said method comprises the steps of:
- retrieving by a first retrieving means (RET1) one or more processing capability information (P_T1; P_T2; P_HN; P_VN; P_IN; P_SPE) associated to any one of a user terminal (T1; T2), a network element (HNE; VNE; INE) of a sub-network (HN; VN; IN) and a service provider equipment (SPE) of a service provider (SP); and
- appointing by an appointing means (APP) for a predefined service of a predefined client, according to predefined rules and conditions, and according to said processing capability information (P_T1; P_T2; P_HN; P_VN; P_IN; P_SPE), one or more out of said terminal (T1; T2), said network elements (HNE; VNE; INE) and said service provider equipment (SPE) to determine thereby an appointed processing environment (P_APP) that has to be used to execute said predefined service.
